Europäisches Patentamt

(19) European Patent Office

Office européen des brevets

(11) Numéro de publication: **0 053 083**
**B1**

(12) **FASCICULE DE BREVET EUROPEEN**

(45) Date de publication du fascicule du brevet:
23.11.83

(51) Int. Cl.³: **F 21 L 15/06,** H 01 M 2/10,
H 01 M 2/20

(21) Numéro de dépôt: 81420152.1

(22) Date de dépôt: 15.10.81

(54) Contacteur électrique à courant continu.

(30) Priorité: 21.11.80 FR 8025023

(43) Date de publication de la demande:
02.06.82 Bulletin 82/22

(45) Mention de la délivrance du brevet:
23.11.83 Bulletin 83/47

(84) Etats contractants désignés:
AT BE CH DE GB IT LI LU NL SE

(56) Documents cités:
US - A - 2 714 152
US - A - 3 737 648

(73) Titulaire: **ETABLISSEMENTS FERNAND BERCHET,
31 cours de Verdun, F-01100 Oyonnax (FR)**

(72) Inventeur: **Rivollet, Marc, 17, rue Bonneton,
F-01100 Oyonnax (FR)**
Inventeur: **Monzer, Pierre, 74, rue Nicod,
F-01100 Oyonnax (FR)**

(74) Mandataire: **Laurent, Michel et al, 20 rue Louis Chirpaz
Boite Postale 32, F-69130 Lyon-Ecully (FR)**

Contacteur électrique à courant continu

L'invention concerne un nouveau type de contacteur électrique fonctionnant sur pile ou similaire.

Comme on le sait, un «contacteur électrique» est un interrupteur servant à établir des liaisons entre différents circuits ou appareils électriques. Dans le cas présent, ce contacteur sert à établir la liaison électrique, donc le passage du courant, entre la source électrique du courant continu (pile, accumulateur, batterie ou similaire) et l'organe utilisateur de ce courant (ampoule, moteur, etc.).

A ce jour, le plus généralement, on a essentiellement proposé deux formules pour réaliser ces liaisons.

Tout d'abord, on a proposé d'utiliser des fils électriques. Si ce mode de liaison souple présente de nombreux avantages, il a pour lui l'inconvénient notable d'être coûteux à réaliser.

En pratique, les contacteurs les plus répandus sont à ce jour à base de lames métalliques souples, dénommées souvent lames de contact. Bien que très largement répandue dans tous les appareils où l'on utilise des piles, tels que les jouets ou les dispositifs d'éclairage portatifs (lampes de poche, etc), cette solution présente des inconvénients notables. On peut citer:

– du fait du manque d'élasticité des lames, une fiabilité douteuse dans le temps,
    – la réalisation de forme limitée,
    – la nécessité d'utiliser plusieurs lames, de formes appropriées, pour réaliser un contact, ainsi que la présence obligatoire d'un interrupteur et d'éléments d'accrochage isolants,
    – la difficulté à absorber les tolérances dimensionnelles des piles,
    – la mauvaise résistance aux chocs répétés, ce qui limite leur emploi dans l'industrie du jouet où l'on exige une certaine résistance aux chutes répétées, alors que cette industrie a un fort besoin de ce type de produit,
    – enfin, un prix élevé, notamment par suite des techniques assez peu précises utilisées pour courber les lames, et des manœuvres de montage.

Le marché demande de plus en plus des contacteurs pour pile électrique ou similaire plus fiables, plus résistants, moins coûteux et même plus miniaturisables. L'invention vise à réaliser ce type de produit.

Elle se rapporte à un nouveau contacteur électrique destiné à assurer la liaison électrique entre une source de courant continu (pile, batterie, accumulateur) et un organe utilisateur de ce courant (moteur, ampoule...). Ce contacteur se caractérise en ce qu'il est formé par une pièce monobloc en matière plastique semi-rigide, isolante, recouverte d'un revêtement conducteur, ladite pièce étant constituée par:

– deux lames parallèles, disposées de part et d'autre de la source du courant continu, et équipées de moyens pour maintenir cette source en place, lesdites lames étant réunies entre elles à leur base par une lame de liaison-flexion destinée, d'une part, à assurer le contact avec l'un des pôles de la source électrique et, d'autre part, à absorber à la fois les variations dimensionnelles de cette source électrique et l'énergie de choc lors des chutes,
– une des deux lames est fixe et comporte à son extrémité un moyen apte à assurer la liaison entre l'autre pôle de la source électrique et l'organe utilisateur et présente sur sa longueur une solution de continuité dans la transmission du courant,
– l'autre lame, souple, présente à son extrémité un moyen pour assurer la liaison électrique avec l'organe utilisateur et joue le rôle de lame de flexion pour ledit moyen.

Avantageusement:
– les moyens pour maintenir la source électrique en place entre les deux lames sont constitués par des clips ou des pattes moulées directement sur chacune des faces en regard des lames;
– la lame de liaison-flexion a une forme générale de V renversé, arrondi à la pointe, relié par ses branches à la base des deux lames parallèles, la pointe arrondie du V venant assurer le contact avec le pôle concerné de la source électrique;
– le moyen pour assurer la liaison entre l'autre pôle de la source électrique et l'organe utilisateur placé à l'extrémité des lames fixes est formé par un réceptacle connecté à l'extrémité d'une lame et dans lequel vient se placer l'organe utilisateur;
– dans le cas d'une ampoule d'éclairage, ce réceptacle, venu directement de moulage, forme douille pour le culot de cette ampoule;
– dans le cas d'un moteur électrique, ce réceptacle reçoit la cage métallique de sortie du moteur;
    – la solution de continuité dans la transmission du courant portée par cette lame fixe est réalisée, soit par une couche de vernis, soit par une forme moulée ou usinée particulière, découpée dans cette lame fixe et qui ultérieurement empêchera le dépôt de la couche conductrice (par exemple une gorge étroite plus profonde que large);
– le moyen pour assurer la liaison entre l'extrémité de la lame souple et l'organe utilisateur est un poussoir moulé directement à l'extrémité de cette lame souple; ce poussoir peut être à contact fugitif ou continu avec accrochage;
– le coefficient d'allongement élastique admissible de cette lame souple et celui de la lame de flexion-liaison sont le plus près possible de celui du revêtement conducteur.

Comme matière plastique, on peut faire appel à toutes les matières connues dans la mesure où, dans les conditions d'utilisation, elles no soient pas cassantes et soient aptes à former des lames susceptibles de recevoir une certaine flexion et enfin, elles soient aptes à être recouvertes d'un revêtement conducteur de l'électricité. En pratique, on fait appel à des résines d'ABS ou styréniques.

Comme déjà dit, il est indispensable que la pièce soit monobloc. Ainsi, on la réalise par des techniques connues de travail des matières plastiques, telles que l'injection.

Comme revêtement conducteur, on peut faire appel soit à des revêtements connus, soit à des peintures. En pratique, on effectue un cuivrage par galvanoplastie. En outre, comme dit, le coefficient d'allongement élastique admissible de la lame souple et de la lame de liaisonflexion sont le plus près possible de celui du revêtement conducteur. En fait, on calcule la flexion de ces deux lames pour les adapter au plus faible allongement.

Les dimensions de la pièce (largeur, épaisseur, longueur des lames, etc...) sont calculées en fonction de l'application envisagée.

Comme source de courant électrique, si le plus généralement on fait appel à des piles cylindriques, on peut également selon les cas utiliser des petites batteries ou des micro-accumulateurs.

La manière dont l'invention peut être réalisée et les avantages qui en découlent ressortiront mieux des exemples de réalisation qui suivent donnés à titre indicatif mais non limitatif.

La figure 1 est une représentation en perspective sommaire d'un contacteur électrique conforme à l'invention.

La figure 2 est une coupe longitudinale de ce contacteur selon la figure 1.

La figure 3 montre une autre forme de réalisation de ce contacteur.

La figure 4 est une vue détaillée de dessus des deux lames enserrant la pile alors que la figure 5 est une vue en coupe de la figure 4 selon l'axe I-I'.

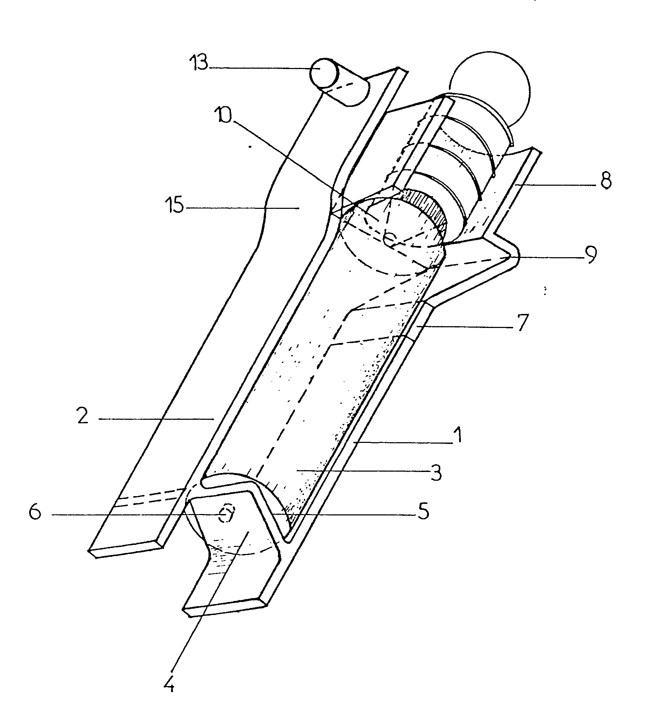

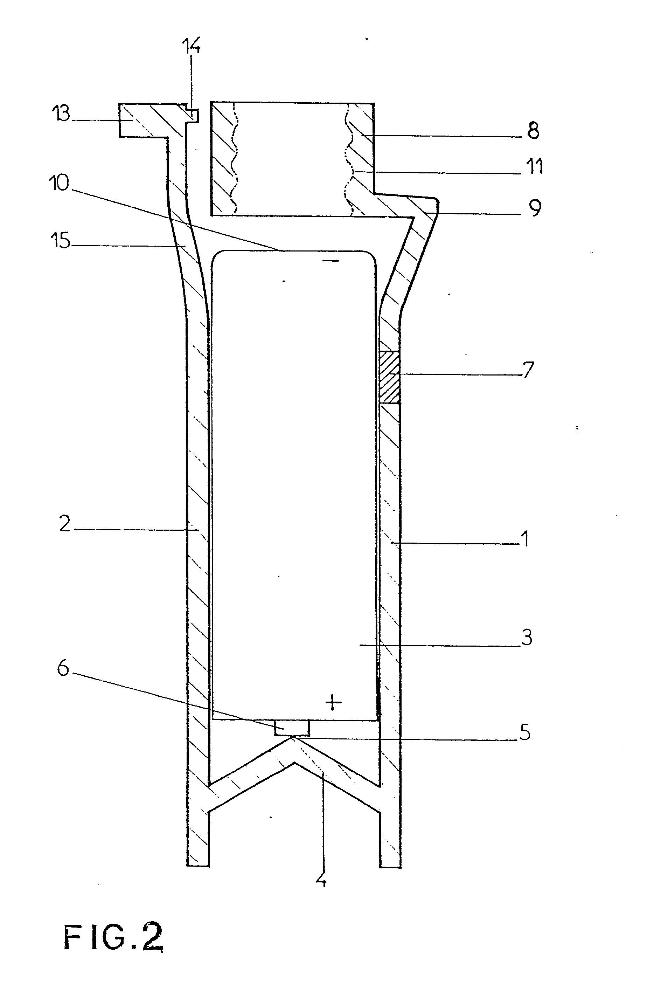

Ce contacteur électrique (voir figures 1 et 2) se compose d'une pièce monobloc en résine ABS revêtue par galvanoplastie d'une couche de cuivre sur toute sa surface, à l'exception de la portion (7) non conductrice définie ci-après. Cette pièce est formée de deux lames parallèles, respectivement:

– une lame dite fixe (1),
– une lame dite souple (2), du moins à son extrémité libre, dont l'écartement entre elles est légèrement supérieur au diamètre de la pile (3) formant source électrique.

Ces lames (1) et (2) sont reliées à leur base par une lame de flexion (4) en forme de V arrondi (5), cet arrondi étant destiné à recevoir le pôle (6) de la pile (3).

La lame (1) dite fixe présente:

– une portion (7) non conductrice; pour ce faire, avant le traitement de galvanoplastie, on a recouvert cette portion (7) d'un vernis approprié,
– et à son extrémité un réceptacle (8) destiné à assurer la liaison électrique entre le pôle (10) de la pile (3) et l'organe utilisateur;
la jonction entre la lame (1) proprement dite et ce réceptacle (8) se fait grâce à une portion coudée (9) destinée à absorber les variations dimensionnelles.

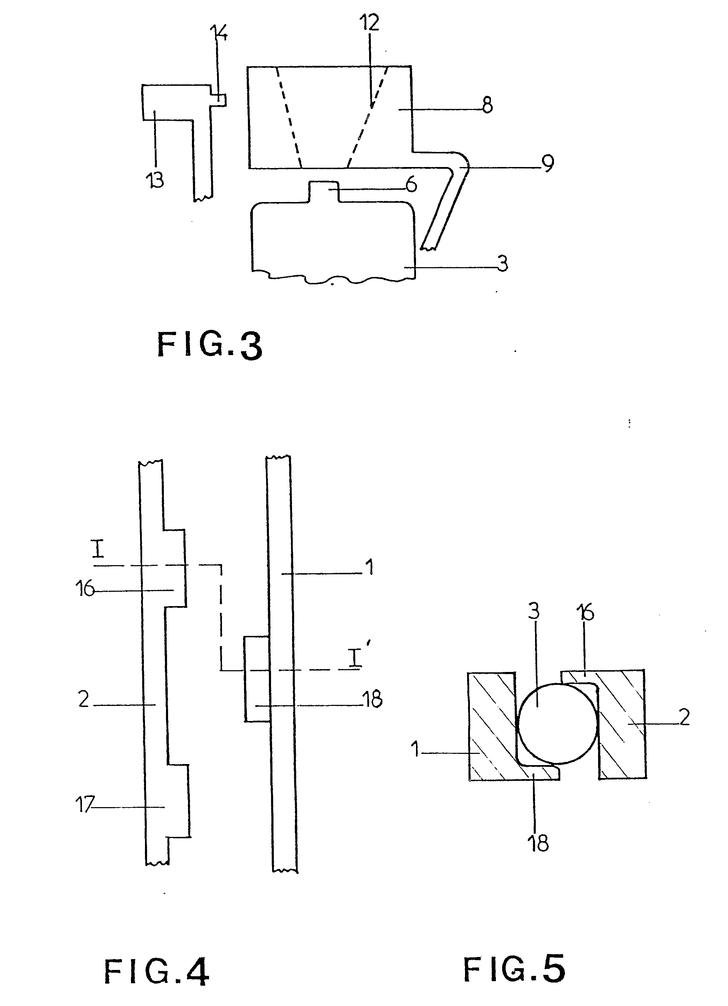

Dans le cas où cet organe utilisateur est une ampoule électrique (figures 1 et 2), ce réceptacle (8) est cylindrique et présente à l'intérieur des rainures (11) spiralées, venues directement de moulage, destinées à permettre le visage du culot de cette ampoule. En revanche, si cet organe est un moteur électrique (figure 3), ce réceptacle peut avoir une forme évasée (12) destinée à recevoir la cage métallique de sortie de ce moteur.

La lame (2) dite souple présente à son extrémité un poussoir formé en deux parties (13) et (14) en forme de bouton venues directement en moulage. La partie coudée (15) permet la flexion de la lame (2) par une simple pression manuelle ou contrôlée (contact fugitif ou contact continu) sur le bouton (13), le contre14bouton (venant alors au contact du réceptacle (8) et établit ainsi la liaison électrique entre l'organe utilisateur (ampoule, moteur) connecté au réceptacle (8) et au pôle (10) (voir 6) et entre l'autre pôle de la pile (3), grâce au revêtement conducteur dont est recouvert la pièce monobloc.

Comme la portion (7) forme une solution de continuité, le courant ne circule donc que dans la lame souple (2).

Afin d'assurer le maintien de la pile (3) entre les deux lames parallèles (1) et (2) (voir figures 4 et 5), ces lames présentent sur leur longueur des pattes (16), (17), (18), venues de moulage, décalées les unes par rapport aux autres et formant clips. De même, pour obliger l'utilisateur à mettre la pile d'un côté préférentiel, on peut ménager sur ces lames des éléments appropries, tels que des trous ou des bossages.

Ce nouveau type de contacteur présente de nombreux avantages par rapport aux réalisations actuelles. On peut citer:

– du fait qu'il soit monobloc, la facilité de construction et de montage,
– un prix de revient nettement amélioré que l'on estime de moitié par rapport aux solutions actuelles à lames métalliques,
– la facilité de stockage et de manipulation,
– la fiabilité accrue due à la précision de l'ensemble,
– la bonne résistance aux chutes répétées,
– la possibilité d'absorber facilement les tolérances dimensionnelles des piles.

De la sorte, on peut utiliser ce contacteur avec succès dans les utilisations où il est indispensable d'établir une liaison électrique entre une source de courant continu et un organe utilisateur, tel que par exemple un jouet ou un système d'éclairage portatif.

**Revendications**

1. Contacteur électrique destiné à assurer la liaison électrique entre une source de courant continu (pile, batterie, accumulateur) et un organe utilisateur de ce courant caractérisé en ce qu'il est formé par une pièce monobloc en matière plastique semi-rigide, isolante, recouverte d'un revêtement conducteur, ladite pièce étant constituée par:

– deux lames parallèles (1) et (2), disposées de part et d'autre de la source du courant continu (3) et équipées de moyens pour maintenir cette source (3) en place,
– lesdites lames (1) et (2) étant réunies entre elles à leur base par une lame de liaison-flexion (4) destinée d'une part à assurer le contact avec l'un des pôles (6) de la source électrique (3) et, d'autre part, à absorber à la fois les variations dimensionnelles de cette source électrique (3) et l'énergie de choc lors des chutes,
– une des deux lames (1) est fixe et comporte à son extrémité (9) un moyen (8) apte à assurer la liaison électrique entre l'autre pôle (10) de la source électrique (3) et l'organe utilisateur et présente sur sa longueur une solution de continuité (7) dans la transmission du courant,
– l'autre lame (2) souple présente à son extrémité un moyen (13-14) pour assurer la liaison électrique avec l'organe utilisateur et joue le rôle de flexion pour ledit moyen (13-14).

2. Contacteur électrique selon la revendication 1, caractérisé en ce que les moyens pour maintenir la source électrique (3) en place entre les deux lames (1) et (2) sont constitués par des pattes (16), (17), (18), venues directement de moulage, disposées sur chacune des faces en regard des lames (1) et (2) et formant clips pour la source électrique (3).

3. Contacteur selon l'une des revendications 1 et 2, caractérisé en ce que la lame de liaison-flexion (4) a une forme générale de V renversé, arrondi à la pointe (5), relié par ses branches à la base des deux lames parallèles (1) et (2), la pointe arrondie (5) du V venant assurer le contact avec le pôle (6) concerné de la source électrique (3).

4. Contacteur selon l'une des revendications 1 à 3, caractérisé en ce que les moyens pour assurer la liaison entre le pôle (10) de la source électrique (3) et l'organe utilisateur placé à l'extrémité de la lame fixe (1) est formé par un réceptacle (8) connecté à l'extrémité (9) de la lame (1) et dans lequel vient se loger l'organe utilisateur.

5. Contacteur selon la revendication 4, caractérisé en ce que ce réceptacle (8) venu directement du moulage, forme douille pour le culot d'une ampoule électrique.

6. Contacteur selon la revendication 4, caractérisé en ce que ce réceptacle (8) est destiné à recevoir la cage métallique de sortie d'un moteur électrique.

7. Contacteur selon l'une des revendications 1 à 6, caractérisé en ce que la solution de continuité (7) portée par la lame fixe (1) est réalisée par une couche de vernis.

8. Contacteur selon l'une des revendications 1 à 6, caractérisé en ce que la solution de continuité (7) dans la transmission de courant portée par la lame fixe (1) est constituée par une gorge étroite plus profonde que large.

9. Contacteur selon l'une des revendications 1 à 8, caractérisé en ce que le moyen pour assurer la liaison entre les extrémités de la lame souple (2) et le réceptacle (8) de l'organe utilisateur est un poussoir (13-14) moulé directement à l'extrémité de cette lame souple (2).

10. Contacteur selon l'une des revendications 1 à 9, caractérisé en ce que le coefficient d'allongement élastique admissible de cette lame souple (2) et celui de la lame de flexion-liaison (4) sont très voisins de celui du revêtement conducteur.

**Claims**

1. Electric switch for electrically connecting a direct-current source such as a cell, a battery, or a storage battery, to a load on a direct-current which is produced from the direct-current source, characterized by the fact that it comprises an insulating, semi-rigid, integral piece of plastic covered with a conducting layer, said integral piece of plastic comprising:

– two parallel blades (1, 2) arranged on opposite sides of the direct-current source (3) and provided with a means of keeping the direct-current source (3) located between the said blades:
– the said blades (1, 2) being joined to their base by a connecting blade (4) capable of making electric contact with one of the poles (6) of the direct-current source (3) and of absorbing dimensional variation of the said direct-current source (3) and shack energy during falls;
– one of the said blades (1) being fixe and comprising at its end (9) a means (8) for making electrical contact between the other pole (10) of the direct-current source (3) and the load, the said blade (1) being provided with an electrical break (7) to current passage along the length of the said blade (1);
– the other blade (2) being flexible and provided at its end with a means (13-14) to make electrical current contact to the load, the said blade (2) acting as a flexure member for the said means (13, 14).

2. Electric switch according to claim 1, characterized by the fact that the means for keeping the direct-current source (3) located between the two blades (1, 2) comprises a plurality of jaws (16, 17, 18) which are integrally molded and located on each side of each blade (1, 2) which are facing each other, the said jaws acting as clips for the direct-current source (3).

3. Electric switch according to claims 1 and 2, characterized by the fact that, wherein the connecting blade (4) assumes an inverted V-shape rounded off at a tip (5), said connecting blade (4) being connected by its arms to the bases of the blades (1, 2) while the rounded tip (5) makes electrical contact with the pole (6) of the direct-current source (3).

4. Electric switch according to claims 1 to 3, characterized by the fact that the means to make electrical contact between the pole (10) of the source (3) and the load is located at the end of the first blade and comprises a receptacle (8) joined to the end (9) of the blade (1) so as to form a seat for the load.

5. Electric switch according to claim 4, characterized by the fact that the receptacle (8) is integrally molded and acts as a socket for the base of an electric light bulb.

6. Electric switch according to claim 4, characterized by the fact that the receptacle (8) seats an electric motor's metal casing acting as one of its terminals.

7. Electric switch according to any of the claims 1 to 6, characterized by the fact that the electric break (7) in the fixe blade (1) comprises a layer of lacquer.

8. Electric switch according to any of the claims 1 to 6, characterized by the fact that the electric break (7) in the fixe blade (1) comprises a narrow groove which is deeper than it is wide.

9. Electric switch according to any of claims 1 to 8, characterized by the fact that, wherein the means to make electrical contact between the end of the flexible blade (2) and the receptacle (8) comprises a push-means (13, 14) integrally molded on the end of this blade (2).

10. Electric switch according to any of claims 1 to 9, characterized by the fact that the flexible blade (2) the connecting blade (4) and the conducting layer have substantially the same permissible coefficient of elastic elongation.


**Patentansprüche:**

1. Elektrische Kontaktvorrichtung zum Sichern einer elektrischen Verbindung zwischen einer Gleichstromquelle (Zelle, Batterie, Akkumulator) und einem Verbraucher,
dadurch gekennzeichnet,
dass sie aus einem einstückigen Teil aus halbstarrem, isolierendem, mit einem leitenden Überzug bedeckten Kunststoff besteht, das aufgebaut ist aus:

- zwei parallelen Zungen (1) und (2), die beiderseits der Gleichstromquelle (3) angeordnet und mit Mitteln zur Lagestabilisierung der Gleichstromquelle (3) ausgerüstet sind,
- wobei die Zungen (1) und (2) an ihrer Basis miteinander durch einen Verbindungs- und Federsteg (4) verbunden sind, die dazu bestimmt ist, einerseits den Kontakt mit dem einen der Pole (6) der Gleichstromquelle (3) zu sichern und andererseits gleichzeitig Massabweichungen dieser Gleichstromquelle (3) und die Stossenergie bei einem Fall aufzufangen,
- wobei eine der Zungen (1) unbeweglich ist und an ihrem Ende (9) ein Mittel (8) zur Sicherung der elektrischen Verbindung zwischen dem anderen Pol (10) der Gleichstromquelle (3) und dem Verbraucher trägt und auf ihrer Länge eine Unterbrechung (7) der Stromleitfähigkeit aufweist,
- wobei die andere, biegsame Zunge (2) an ihrem Ende ein Mittel (13, 14) zur Herstellung der elektrischen Verbindung mit dem Verbraucher aufweist und als Federung für dieses Mittel (13, 14) dient.

2. Elektrische Kontaktvorrichtung nach Anspruch 1, dadurch gekennzeichnet, dass die Mittel zur Lagestabilisierung der Gleichstromquelle (3) zwischen den beiden Zungen (1) und (2) aus angeformten Lappen (16, 17, 18) gebildet sind, die auf jeder der einander zugewandten Oberflächen der Zungen (1) und (2) angeordnet sind und Clips für die Gleichstromquelle (3) bilden.

3. Elektrische Kontaktvorrichtung nach Anspruch 1 oder 2, dadurch gekennzeichnet, dass der Verbindungs- und Federsteg (4) im wesentlichen die Form eines umgekehrten V hat, das an der Spitze (5) abgerundet und über seine Schenkel mit der Basis der beiden parallelen Zungen (1, 2) verbunden ist, wobei die abgerundete Spitze des V den Kontakt mit dem Pol (6) der Gleichstromquelle (3) sichert.

4. Kontaktvorrichtung nach einem der Ansprüche 1 bis 3, dadurch gekennzeichnet, dass die Mittel zur Sicherung der Verbindung zwischen dem Pol (10) der Gleichstromquelle (3) und dem am Ende der unbeweglichen Zunge (1) befindlichen Verbraucher durch einen Aufnahmekörper (8) am Ende (9) der Zunge (1) gebildet ist, in den der Verbraucher eingesetzt wird.

5. Kontaktvorrichtung nach Anspruch 4, dadurch gekennzeichnet, dass der gegossene Aufnahmekörper (8) die Fassung für den Sockel einer Glühbirne bildet.

6. Kontaktvorrichtung nach Anspruch 4, dadurch gekennzeichnet, dass der Aufnahmekörper (8) zur Aufnahme des metallischen Anschlusskäfigs eines Elektromotors bestimmt ist.

7. Kontaktvorrichtung nach einem der Ansprüche 1 bis 6, dadurch gekennzeichnet, dass die Unterbrechung (7) der Stromleitung an der unbeweglichen Zunge (1) durch eine Lackschicht hergestellt ist.

8. Kontaktvorrichtung nach einem der Ansprüche 1 bis 6, dadurch gekennzeichnet, dass die Unterbrechung (7) der Stromleitung auf der unbeweglichen Zunge (1) durch eine schmale Auskehlung gebildet ist, welche tiefer als breit ist.

9. Kontaktvorrichtung nach einem der Ansprüche 1 bis 8, dadurch gekennzeichnet, dass die Mittel zur Sicherung der Verbindung zwischen den Enden der biegsamen Zunge (2) und dem Aufnahmekörper (8) für den Verbraucher ein unmittelbar am Ende der biegsamen Zunge (2) angeformter Drücker (13, 14) ist.

10. Kontaktvorrichtung nach einem der Ansprüche 1 bis 9, dadurch gekennzeichnet, dass der zulässige elastische Dehnungskoeffizient der biegsamen Zunge (2) und des Verbindungs- und Federsteges (4) sehr nahe bei dem Dehnungskoeffizienten des stromleitenden Überzuges liegen.

FIG.2

**FIG.3**

**FIG.4**

**FIG.5**